# EUROPEAN PATENT SPECIFICATION

(11) **EP 3 739 992 B1**
(45) Date of publication and mention of the grant of the patent: **21.02.2024**
(21) Application number: 18899537.7
(22) Date of filing: 17.12.2018
(51) Int. Cl.: H04W 72/04, H04L 1/1867, H04L 1/1822, H04L 5/00, H04W 72/23

(54) **INFORMATION PROCESSING METHOD, DEVICE, AND APPARATUS**
INFORMATIONSVERARBEITUNGSVERFAHREN, -VORRICHTUNG UND -EINRICHTUNG
PROCÉDÉ, DISPOSITIF ET APPAREIL DE TRAITEMENT D'INFORMATIONS

(30) Priority: 09.01.2018 CN 201810020219
(43) Date of publication of application: 18.11.2020
(73) Proprietor: Datang Mobile Communications Equipment Co., Ltd., Beijing 100085 (CN)
(72) Inventor: MIAO, Jinhua, Beijing 100191 (CN); CHEN, Li, Beijing 100191 (CN)
(74) Representative: Studio Torta S.p.A.
(86) International application number: PCT/CN2018/121471
(87) International publication number: WO 2019/137157

(56) References cited:
- EP-A2- 2 262 343
- WO-A1-2016/190592
- WO-A1-2017/047404
- WO-A1-2017/140475
- WO-A1-2020/094124
- CN-A- 101 567 770
- CN-A- 106 255 210
- CN-A- 107 277 923
- HUAWEI: "Running CR for SPS in sTTI TS 36.331", 3GPP TSG-RAN WG2 Meeting #99bis, R2-1710403, 13 October 2017 (2017-10-13), XP051342448,
- QUALCOMM INCORPORATED: "Open Issues on BWP", 3GPP DRAFT; R1-1720693 OPEN ISSUES ON BWP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, NV, USA; 20171127 - 20171201 18 November 2017 (2017-11-18), XP051370154, Retrieved from the Internet: URL:http://www.3gpp.org/ftp/tsg%5Fran/WG1% 5FRL1/TSGR1%5F91/Docs/ [retrieved on 2017-11-18]
- HUAWEI ET AL: "Further discussion on configuration of ConfiguredGrantTimer", 3GPP DRAFT; R2-1801036 FURTHER DISCUSSION ON CONFIGURATION OF CONFIGUREDGRANTTIMER, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Vancouver, Canada; 20180122 - 20180126 12 January 2018 (2018-01-12), XP051386533, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]

## Description

### TECHNICAL FIELD

The present disclosure relates to the field of communication technologies, and in particular, to an information processing method, device, and equipment.

### BACKGROUND

In the fifth generation mobile communication systems (5G or New Radio (NR) systems), the network bandwidth may be much larger than the terminal transmission bandwidth (the network bandwidth can be configured to a maximum of 400 MHz). However, the capabilities of user equipment (UEs) are different. For example, the capabilities of some UEs may not support such a large bandwidth, for example, for the purpose of power saving or the like.

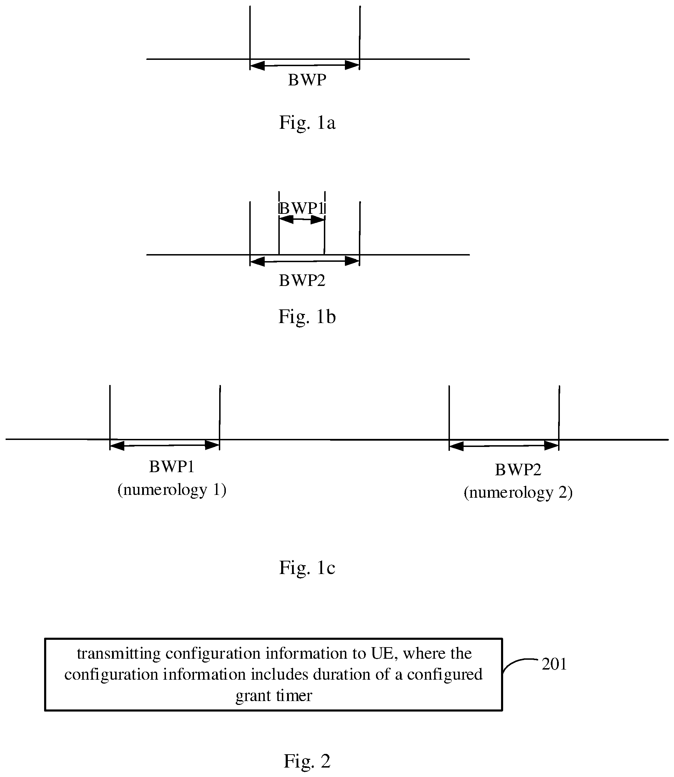

The bandwidth part (BWP) configuration scenarios in the related art are as shown in Fig. 1a, Fig. 1b and Fig. 1c. In the scenario of Fig. 1a, the UE is limited in its ability to support data reception and transmission over a large bandwidth, so a smaller BWP needs to be configured. In the scenario of Fig. 1b, the UE supports the configuration of BWP2, but for power saving, the UE may choose to operate in BWP 1. In the scenario of FIG. 1c, the UE uses numerology 1 in BWP1 and numerology 2 in BWP2.

The numerology is a description of physical characteristics. The characteristics in numerology include: different subcarrier spaces (SCSs), different transmission time intervals (TTIs), etc. Different numerologies are provided with different parameters to meet different service requirements. For example, some services require shorter TTI duration, etc. In practical applications, the network side copes with various requirements by configuring different BWPs.

However, the UE can activate only a single BWP for one cell. Assuming that BWP1 and BWP2 both belong to a same cell, only one BWP can be activated for the UE at a time, i.e. the UE activates either BWP1 or BWP2. The UE may perform signaling and data transmission in an activated BWP and may switch between different BWPs. In the standardization discussion in the related art, it is agreed that retransmission can be performed between different BWPs, that is, the same hybrid automatic repeat request (HARQ) can be switched between different BWPs.

Configured grant scheduling refers to a transmission mode in which resources are allocated and scheduled in advance, and specifically includes: semi-persistent scheduling (SPS), and configured scheduling based on radio resource control (RRC) configuration.

In the discussion on NR, a scheme in which a downlink (DL) feedback channel is removed is employed. That is, after the uplink (UL) data is transmitted, there is no feedback channel similar to a physical hybrid ARQ indicator channel (PHICH) in Long Term Evolution (LTE), instead, a downlink control information (DCI) indication mode is used. If the UL data is transmitted incorrectly, the network side transmits retransmission DCI to request a retransmission, and if the UL data is transmitted correctly, the DCI is used to schedule the same HARQ process to perform a new transmission.

However, in the process of configured grant scheduling, the manner in which a new transmission is performed does not need to be indicated by the DCI. Instead, a new transmission is automatically triggered when certain time conditions are met. Therefore, this will result in that the UE is unable to ascertain when the HARQ process may be cleared off to perform a new transmission. As a result, a configured grant timer is defined.

However, there is no configuration and maintenance schemes for the configured grant timer in the related art, so that the accuracy of data transmission cannot be determined.

WO 2016/190592 A1 relates to a method and a device for performing an ACK/NACK indication based on the uplink grants over multiple subframes in a wireless communication system.

EP 2262343 A2 relates to a method and apparatus for minimizing redundant enhanced uplink (EU) allocation requests and fault-isolating EU transmission failures.

CN 101567770 A relates to a method for configuring a DRX inactivity timer on the basis of a TTI bundling scheme.

### SUMMARY

This invention is set out in the appended set of claims.

### BRIEF DESCRIPTION OF THE DRAWINGS

Fig. 1a, Fig. 1b, and Fig. 1c are schematic diagrams of BWP configuration scenarios in the related art, respectively;
Fig. 2 is a flow chart of an information processing method according to an embodiment of the present disclosure;
Fig. 3 is a flow chart of an information processing method according to an embodiment of the present disclosure;
Fig. 4 is a flow chart of an information processing method according to an embodiment of the present disclosure;
Fig. 5 is a schematic diagram of duration of configured grant timers corresponding to different TTIs according to an embodiment not covered by the claimed invention;
Fig. 6 is a flow chart of an information processing method according to an embodiment of the present disclosure;
Fig. 7 is a schematic diagram of duration of configured grant timers corresponding to different BWPs according to an embodiment of the present disclosure;
Fig. 8 is a schematic diagram of an information processing device according to an embodiment of the present disclosure;
Fig. 9 is a schematic diagram of an information processing device according to an embodiment of the present disclosure;
Fig. 10 is a schematic diagram of communication equipment according to an embodiment of the present disclosure;
Fig. 11 is a schematic diagram of communication equipment according to an embodiment of the present disclosure.

### DETAILED DESCRIPTION

Specific embodiments of the present disclosure will be described in further detail below with reference to the accompanying drawings and examples. The following examples are intended to illustrate the present disclosure, but are not intended to limit the scope of the present disclosure.

As shown in Fig. 2, the information processing method according to an embodiment of the present disclosure is applied to a network side, and includes: a step 201: transmitting configuration information to UE, where the configuration information includes duration of a configured grant timer.

The duration of the configured grant timer may be set by the network side according to different application environments or scenarios. The configured grant timer is used for recording whether a resource grant is valid. After the UE performs an initial transmission or retransmission, the configured grant timer is started. If the configured grant timer expires, the HARQ process of the resource grant is terminated and the corresponding transmission is delivered to a physical layer; when a scheduling command for the HARQ process is received (new transmission/retransmission), the configured grant timer is started or restarted.

According to the invention, the duration of the configured grant timer is configured independently for one or more of the following reference parameters: bandwidth part (BWP), uplink carrier, numerology or subcarrier space (SCS) corresponding to the numerology. In the foregoing specifications, references to the duration of the configured grant timer as being configured independently for the transmission time interval (TTI) duration or for the serving cell must be considered as according to the disclosure (i.e. examples useful for putting the invention into context) but not according to the invention.

In the embodiment of the present disclosure, the configured grant timers may be configured independently for different reference parameters, respectively. Specifically, when the reference parameter is BWP, a configured grant timer is independently configured for each BWP; or when the reference parameter is TTI duration, a configured grant timer is independently configured for each TTI (embodiment not covered by the claimed invention); or when the reference parameter is uplink carrier, a configured grant timer is independently configured for each uplink carrier; or when the reference parameter is numerology or SCS corresponding to the numerology, a configured grant timer is independently configured for each numerology or SCS corresponding to the numerology; or when the reference parameter is serving cell, a configured grant timer is configured for each serving cell (embodiment not covered by the claimed invention).

The starting position of the configured grant timer is the starting position of a subframe where the data transmission moment is located, or the starting position of the configured grant timer is the current slot of data transmission. The unit of the duration of the configured grant timer includes: subframe, symbol, or slot.

For example, assuming that the reference parameter is BWP which include BWP1 and BWP2, configured grant timers may be configured for BWP1 and BWP2, respectively. It is assumed the configured grant timers have duration T1 and T2, respectively.

In addition, in order to further facilitate the determination of the accuracy of data transmission, the configuration information further includes: timer running indication information, where the timer running indication information is used to indicate to the UE any one or more of following information: when the reference parameter is BWP, if a change of BWP occurs, a configured grant timer corresponding to a BWP before the change or corresponding to a BWP after the change is run during the change of BWP to maintain a hybrid automatic repeat request HARQ process in the BWP before the change; when configured grant scheduling information is received or retransmission is initiated in the BWP after the change, a configured grant timer corresponding to the BWP after the change is run; when the reference parameter is TTI duration, if a change of TTI occurs, a configured grant timer corresponding to TTI duration before the change or corresponding to TTI duration after the change is run during the change of TTI to maintain an HARQ process in the TTI duration before the change; when the configured grant scheduling information is received or retransmission is initiated in the TTI duration after the change, a configured grant timer corresponding to the TTI duration after the change is run; when the reference parameter is uplink carrier, if a change of uplink carrier occurs, a configured grant timer corresponding to an uplink carrier before the change or corresponding to an uplink carrier after the change is run during the change of uplink carrier to maintain an HARQ process on the uplink carrier before the change; when the configured grant scheduling information is received or retransmission is initiated on the uplink carrier after the change, a configured grant timer corresponding to the uplink carrier after the change is run.

In the embodiment of the present disclosure, the network side transmits acquired duration of the configured grant timer to the UE, so that the UE side can perform data transmission according to the duration of the configured grant timer and the acquired configured grant scheduling information, and maintain the state of the grant timer, thereby determining the data transmission accuracy, and further arranging an effective retransmission or initiating a new transmission in time. Thus, the data transmission accuracy, the data transmission efficiency and the resource utilization rate are improved.

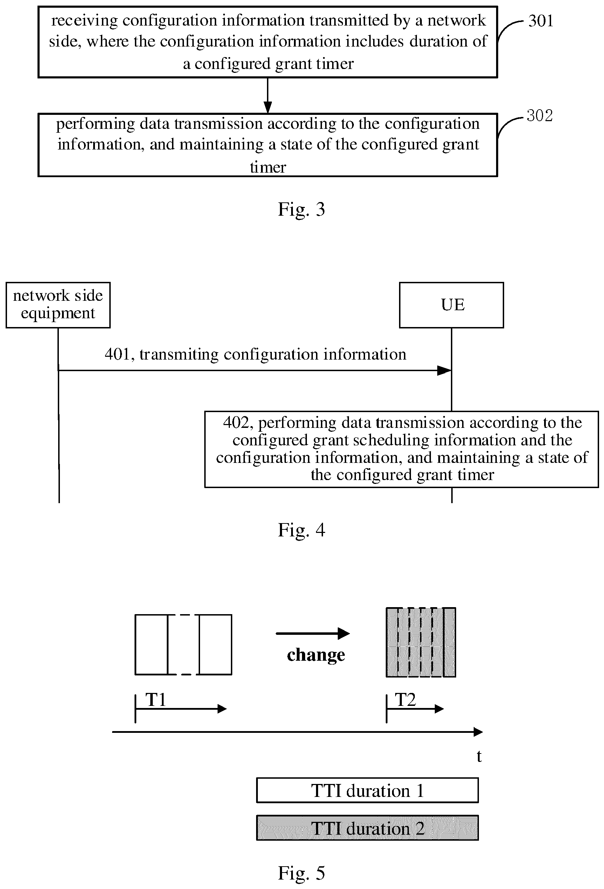

As shown in Fig. 3, an information processing method according to an embodiment of the present disclosure is applied to the UE, and includes following steps.

A step 301: receiving configuration information transmitted by a network side, where the configuration information includes duration of a configured grant timer.

The duration of the configured grant timer is configured independently for one or more of the following reference parameters: BWP, TTI duration, uplink carrier, numerology or SCS corresponding to the numerology, or serving cell.

The starting position of the configured grant timer is the starting position of the subframe where the data transmission moment is located, or the starting position of the configured grant timer is the current slot of data transmission. A unit of the duration of the configured grant timer includes: subframe, symbol, or slot.

A step 302: performing data transmission according to the configuration information, and maintaining a state of the configured grant timer.

Specifically, in this step, the UE acquires the timer duration of the target configured grant timer according to current transmission characteristics. The transmission characteristics include BWP, TTI duration, uplink carrier, numerology or SCS corresponding to the numerology, serving cell.

When there is data to be transmitted in the HARQ process, a data packet is transmitted, and the target configured grant timer is started or restarted; and when it is determined according to the duration of the target configured grant timer that the target configured grant timer expires, the HARQ process is terminated and the target configured grant timer is stopped.

In addition, in order to further facilitate the determination of the accuracy of data transmission, the configuration information further includes: timer running indication information, where the timer running indication information is used to indicate any one or more of the following information: when the reference parameter includes BWP, if a change of BWP occurs, running a configured grant timer corresponding to a BWP before the change or corresponding to a BWP after the change during the change of BWP to maintain a hybrid automatic repeat request HARQ process in the BWP before the change; when configured grant scheduling information is received or retransmission is initiated in the BWP after the change, running a configured grant timer corresponding to the BWP after the change; when the reference parameter includes TTI duration, if a change of TTI occurs, running a configured grant timer corresponding to TTI duration before the change or corresponding to TTI duration after the change during the change of TTI to maintain the HARQ process in the TTI duration before the change; when the configured grant scheduling information is received or retransmission is initiated in the TTI duration after the change, running a configured grant timer corresponding to the TTI duration after the change; when the reference parameter includes uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

For example, according to the timer running indication information, if a change of BWP, assuming that a BWP1 is changed to a BWP2, occurs during data transmission by the UE, a configured grant timer corresponding to the BWP1 before the change or corresponding to the BWP2 after the change is run during the change of BWP, to maintain an HARQ process in the BWP1 before the change; when configured grant scheduling information is received or a retransmission is initiated in the BWP2 after the change, a configured grant timer corresponding to the BWP2 after the change is run.

In the embodiment of the disclosure, the network side transmits the acquired duration of the configured grant timer to the UE, so that the UE side can perform data transmission according to the duration of the configured grant timer and the acquired configured grant scheduling information, and maintain the state of the grant timer, thereby determining the data transmission accuracy, and further arranging an effective retransmission or initiating a new transmission in time. Thus, the data transmission accuracy, the data transmission efficiency and the resource utilization rate are improved.

Hereinafter, an implementation process of the information processing method according to the embodiment of the present disclosure is described with reference to different reference parameters.

In this embodiment not covered by the claimed invention, a description is given by taking configuring different configured grant timers based on duration of TTIs as an example. As shown in Fig. 4, the information processing method according to the embodiment not covered by the claimed invention includes the following process.

A step 401: a network side transmits configuration information to UE.

The configuration information includes: configured grant scheduling information, duration of a configured grant timer and corresponding TTI duration.

In the embodiment not covered by the claimed invention, the duration of the configured grant timer is set to corresponding values based on different TTI duration.

In addition, the configuration information may further include timer running indication information, where the timer running indication information is used to indicate to the UE: if a change of TTI occurs, a configured grant timer corresponding to TTI duration before the change or corresponding to TTI duration after the change is run during the change of TTI to maintain the HARQ process in the TTI duration before the change; when the configured grant scheduling information is received or retransmission is initiated in the TTI duration after the change, a configured grant timer corresponding to the TTI duration after the change is run.

As shown in Fig. 5, in the case of different TTI duration, the duration of the configured grant timer is set to T1 for the duration of TTI 1; and the duration of the configured grant timer is set to T2 for the duration of TTI 2. The starting position of the duration of the configured grant timer may be the starting position of the subframe where the data transmission moment is located, or may be the current slot of data transmission. The unit of the duration of the configured grant timer may be subframe, symbol, or slot.

A step 402: UE performs data transmission according to the configured grant scheduling information and the configuration information, and maintains a state of the configured grant timer.

Specifically, when there is data to be transmitted in an HARQ process, the UE transmits a data packet, and starts or restarts the configured grant timer. When the timer expires, the data in the process is delivered to a physical layer. When a scheduling command (new transmission/retransmission) for this HARQ process is received, the UE starts or restarts the configured grant timer.

If the configuration information further includes timer running indication information, if a change of TTI occurs in the process of data transmission, a configured grant timer corresponding to TTI duration before the change or corresponding to TTI duration after the change is run during the change of TTI, to maintain the HARQ process in the TTI duration before the change; when the configured grant scheduling information is received or retransmission is initiated in the TTI duration after the change, a configured grant timer corresponding to the TTI duration after the change is run.

For example, if a change of TTI, assuming that a TTI 1 is changed to a TTI 2, occurs during data transmission, the UE runs a configured grant timer corresponding to TTI 1 before the change or corresponding to TTI 2 after the change during the change of TTI, to maintain the HARQ process in the TTI 1 before the change; and when configured grant scheduling information is received or retransmission is initiated in the TTI 2 after the change, the UE runs a configured grant timer corresponding to the TTI 2 after the change.

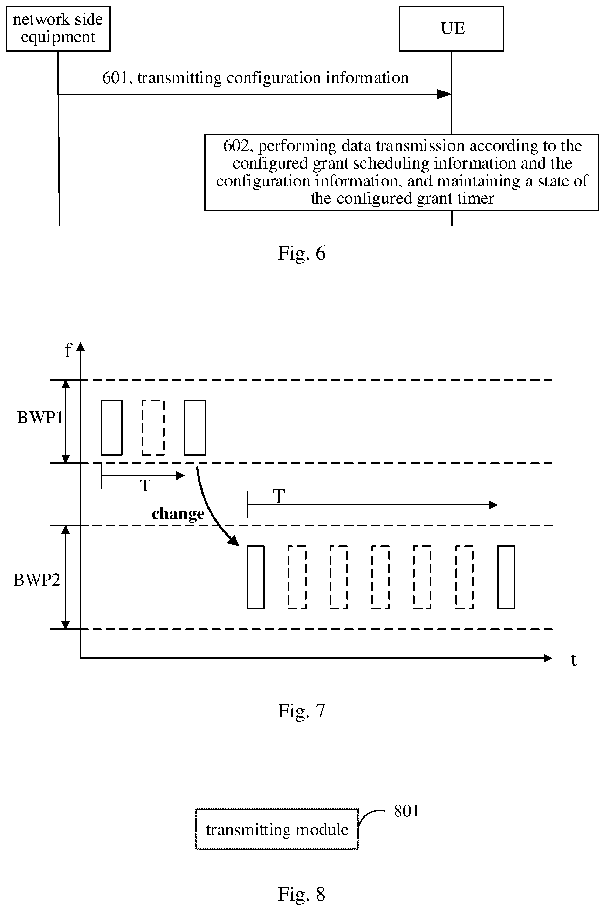

In this embodiment, a description is given by taking configuring different configured grant timers based on lengths of BWPs as an example. As shown in Fig. 6, the information processing method according to the embodiment of the present disclosure includes the following process.

A step 601: a network side transmits configuration information to UE.

The configuration information includes: configured grant scheduling information, the duration of the configured grant timer and corresponding length of BWP.

In the embodiment of the present disclosure, duration of the configured grant timer is set to corresponding values based on different lengths of BWPs.

In addition, the configuration information may further include timer running indication information, where the timer running indication information is used to indicate to the UE: if a change of BWP occurs, running a configured grant timer corresponding to a BWP before the change or corresponding to a BWP after the change during the change of BWP to maintain a hybrid automatic repeat request HARQ process in the BWP before the change; when the configured grant scheduling information is received or retransmission is initiated in the BWP after the change, running a configured grant timer corresponding to the BWP after the change.

In the case of different BWPs, as shown in Fig. 7, the duration of the configured grant timer is set to T1 for the length of BWP1; the duration of the configured grant timer is set to T2 for the length of BWP2. The starting position of the configured grant timer may be a starting position of a subframe where the data transmission moment is located, or may be a current slot of data transmission. A unit of the duration of the configured grant timer may be on the order of a subframe, or may be a unit length of a current slot of data transmission.

A step 602: the UE performs data transmission according to the configured grant scheduling information and the configuration information, and maintains a state of the configured grant timer.

Specifically, when there is data to be transmitted in an HARQ process, the UE transmits a data packet, and starts or restarts the configured grant timer. When the timer expires, the data in the process is delivered to a physical layer. When a scheduling command (new transmission/retransmission) for this HARQ process is received, the UE starts or restarts the configured grant timer.

If the configuration information further includes timer running indication information, if a change of BWP occurs in the process of data transmission, a configured grant timer corresponding to a BWP before the change or corresponding to a BWP after the change is run during the change of BWP to maintain a hybrid automatic repeat request HARQ process in the BWP before the change; and when the configured grant scheduling information is received or retransmission is initiated in the BWP after the change, a configured grant timer corresponding to the BWP after the change is run.

For example, if a change of BWP, assuming that a BWP1 is changed to a BWP2, occurs during data transmission by the UE, the configured grant timer corresponding to the BWP1 before the change or corresponding to the BWP2 after the change is run during the change of BWP, to maintain the HARQ process in the BWP1 before the change; when the configured grant scheduling information is received or a retransmission is initiated in the BWP2 after the change, the configured grant timer corresponding to the BWP2 after the change is run.

As shown in Fig. 7, after a resource configuration process is changed to BWP2, if there is no corresponding configured grant scheduling information, the configured grant timer is stopped. Or, if corresponding numerology in BWP2 is different from numerology in BWP1, or other conditions cause the HARQ process to fail to retransmit in BWP2, the configured grant timer is stopped.

In an embodiment of the present disclosure, the duration of the configured grant timer may also be configured for different uplink carriers. The duration of the configured grant timer can be transmitted to the UE through the configuration information. For example, the duration of the supplementary uplink (SUL) configured grant timer corresponding to the uplink carrier 1 is T1, and the duration of the SUL configured grant timer corresponding to the uplink carrier 2 is T2. Also, in the embodiment of the present disclosure, the configuration information further includes timer running indication information, where the timer running indication information is used to indicate to the UE: if a change of uplink carrier occurs, running a configured grant timer corresponding to an uplink carrier before the change or corresponding to an uplink carrier after the change during the change of uplink carrier so as to maintain the HARQ process on the uplink carrier before the change; and when the configured grant scheduling information is received or retransmission is initiated on the uplink carrier after the change, running a configured grant timer corresponding to the uplink carrier after the change.

Then, if a change of uplink carrier occurs in the subsequent data transmission process by the UE, a configured grant timer corresponding to the uplink carrier before the change or corresponding to the uplink carrier after the change is run during the change of uplink carrier to maintain the HARQ process on the uplink carrier before the change; and when the configured grant scheduling information is received or retransmission is initiated on the uplink carrier after the change, the configured grant timer corresponding to the uplink carrier after the change is run.

For other processes of this embodiment, references may be made to descriptions of Fig. 4 or Fig. 6.

In an embodiment of the present disclosure, the duration of the configured grant timer may also be configured for different numerologies. For example, the duration of the SUL configured grant timer corresponding to numerology 1 is T3, and the duration of the SUL configured grant timer corresponding to numerology 2 is T4. For other processes of this embodiment, references may be made to descriptions of Fig. 4 or Fig. 6.

In an embodiment of the present disclosure, the duration of the configured grant timer may also be configured for SCSs of different numerologies. For example, the duration of the SUL configured grant timer corresponding to the SCS 1 is T5, and the duration of the SUL configured grant timer corresponding to the SCS2 is T6. For other processes of this embodiment, references may be made to descriptions of Fig. 4 or Fig. 6.

In an embodiment of the present disclosure, the duration of the configured grant timer may also be configured for different serving cells. For example, the duration of the SUL configured grant timer corresponding to the serving cell 1 is T7, and the duration of the SUL configured grant timer corresponding to the serving cell 2 is T8. For other processes of this embodiment, references may be made to descriptions of Fig. 4 or Fig. 6.

In the above embodiments, the duration of the configured grant timer is configured according to different reference parameters, so that under different parameter characteristic configurations, improved determination and maintenance of data transmission accuracy, data transmission efficiency and resource utilization rate are achieved.

As shown in Fig. 8, an information processing device according to an embodiment of the present disclosure includes: a transmitting module 801, configured to transmit configuration information to UE, where the configuration information includes duration of a configured grant timer; the duration of the configured grant timer is configured independently for one or more of the following reference parameters: BWP, TTI duration, uplink carrier, numerology or SCS corresponding to the numerology, or serving cell.

The starting position of the configured grant timer is the starting position of the subframe where the data transmission moment is located, or the starting position of the configured grant timer is the current slot of data transmission. A unit of the duration of the configured grant timer includes: subframe, symbol, or slot.

Specifically, when the reference parameter is BWP, a configured grant timer is configured independently for each BWP; or when the reference parameter is TTI duration, a configured grant timer is configured independently for each TTI (embodiment not covered by the claimed invention); or when the reference parameter is uplink carrier, a configured grant timer is configured independently for each uplink carrier; or when the reference parameter is numerology or SCS corresponding to the numerology, a configured grant timer is configured independently for each numerology or SCS corresponding to the numerology; or when the reference parameter is serving cell, a configured grant timer is configured for each serving cell (embodiment not covered by the claimed invention).

In addition, in order to further facilitate the determination of the accuracy of data transmission, the configuration information further includes timer running indication information, where the timer running indication information is used to indicate to the UE any one or more of following information: when the reference parameter is BWP, if a change of BWP occurs, running a configured grant timer corresponding to the BWP before the change or corresponding to the BWP after the change during the change of BWP to maintain a hybrid automatic repeat request HARQ process in the BWP before the change; and when the configured grant scheduling information is received or retransmission is initiated in the BWP after the change, running a configured grant timer corresponding to the BWP after the change; when the reference parameter is TTI duration, if a change of TTI occurs, running a configured grant timer corresponding to TTI duration before the change or corresponding to TTI duration after the change during the change of TTI to maintain an HARQ process in the TTI duration before the change; when the configured grant scheduling information is received or retransmission is initiated in the TTI duration after the change, running a configured grant timer corresponding to the TTI duration after the change; when the reference parameter is uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

For the principle of operation of the device of the present disclosure, references may be made to the descriptions of the foregoing method embodiments.

In the embodiment of the disclosure, the network side transmits the acquired duration of the configured grant timer to the UE, so that the UE side can perform data transmission according to the duration of the configured grant timer and the acquired configured grant scheduling information, and maintain the state of the grant timer, thereby determining the data transmission accuracy, and further arranging an effective retransmission or initiating a new transmission in time. Thus, the data transmission accuracy, the data transmission efficiency and the resource utilization rate are improved.

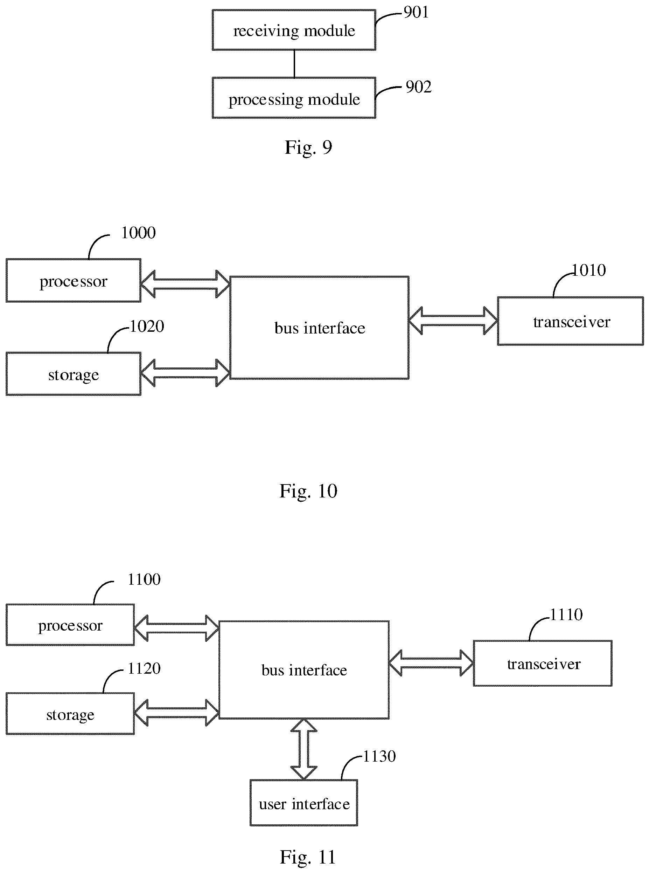

As shown in Fig. 9, the information processing device according to the embodiment of the present disclosure includes: a receiving module 901, configured to receive configuration information transmitted by a network side, where the configuration information includes duration of a configured grant timer; a processing module 902, configured to perform data transmission according to the configuration information, and maintain the state of the configured grant timer; where the duration of the configured grant timer is configured independently for one or more of the following reference parameters: BWP, TTI duration, uplink carrier, numerology or SCS corresponding to the numerology, or serving cell.

The starting position of the configured grant timer is the starting position of the subframe where the data transmission moment is located, or the starting position of the configured grant timer is the current slot of data transmission. A unit of the duration of the configured grant timer includes: subframe, symbol, or slot.

The configuration information further includes: timer running indication information, where the timer running indication information is used to indicate any one or more of the following information: when the reference parameter includes BWP, if a change of BWP occurs, running a configured grant timer corresponding to a BWP before the change or corresponding to a BWP after the change during the change of BWP to maintain a hybrid automatic repeat request HARQ process in the BWP before the change; and when the configured grant scheduling information is received or retransmission is initiated in the BWP after the change, running a configured grant timer corresponding to the BWP after the change; when the reference parameter includes TTI duration, if a change of TTI occurs, running a configured grant timer corresponding to TTI duration before the change or corresponding to TTI duration after the change during the change of TTI to maintain the HARQ process in the TTI duration before the change; when the configured grant scheduling information is received or retransmission is initiated in the TTI duration after the change, running a configured grant timer corresponding to the TTI duration after the change; when the reference parameter includes uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

The processing module 902 is specifically configured for: acquiring the timer duration of a target configured grant timer according to current transmission characteristics, where the transmission characteristics include BWP, TTI duration, uplink carrier, numerology or SCS corresponding to the numerology, serving cell; when there is data to be transmitted in the HARQ process, transmitting a data packet, and starting or restarting the target configured grant timer; when it is determined according to the duration of the target configured grant timer that the target configured grant timer expires, terminating the HARQ process and stopping the target configured grant timer.

For the principle of operation of the device of the present disclosure, references may made to the descriptions of the foregoing method embodiments.

In the embodiment of the disclosure, the network side transmits the acquired duration of the configured grant timer to the UE, so that the UE side can perform data transmission according to the duration of the configured grant timer and the acquired configured grant scheduling information, and maintain the state of the grant timer, thereby determining the data transmission accuracy, and further arranging an effective retransmission or initiating a new transmission in time. Thus, the data transmission accuracy, the data transmission efficiency and the resource utilization rate are improved.

As shown in Fig. 10, information processing equipment according to an embodiment not covered by the claimed invention includes:
a processor 1000, configured to read a program in a storage 1020 to implement the following process: transmitting configuration information to UE, where the configuration information includes the duration of a configured grant timer; or, a processor 1000, configured to read a program in a storage 1020, to implement the following process: transmitting configuration information to UE through a transceiver 1010, where the configuration information includes the duration of a configured grant timer;
the transceiver 1010, configured to receive and transmit data under the control of the processor 1000.

The duration of the configured grant timer is configured independently for one or more of the following reference parameters: BWP, TTI duration, uplink carrier, numerology or SCS corresponding to the numerology, or serving cell.

In Fig. 10, a bus architecture may include any number of interconnected buses and bridges. Various circuits, specifically, one or more processors represented by the processor 1000 and a storage represented by the storage 1020, are linked together. The bus architecture may also link various other circuits such as peripherals, voltage regulators and power management circuits, which are well known in the art, and therefore a further description is omitted herein. The bus interface provides interfaces. The transceiver 1010 may be a plurality of elements, that is, includes a transmitter and a receiver, to provide units configured to communicate with various other devices over a transmission medium. The processor 1000 is responsible for managing the bus architecture and general processing, and the storage 1020 may store data used by the processor 1000 when performing operations.

The processor 1000 is responsible for managing the bus architecture and general processing, and the storage 1020 may store data used by the processor 1000 when performing operations.

The processor 1000 is further configured to read the program to implement the following steps: when the reference parameter is BWP, independently configuring a configured grant timer for each BWP; or when the reference parameter is TTI duration, independently configuring a configured grant timer for each TTI; or when the reference parameter is uplink carrier, independently configuring a configured grant timer for each uplink carrier; or when the reference parameter is numerology or SCS corresponding to the numerology, independently configuring a configured grant timer for each numerology or SCS corresponding to the numerology; or when the reference parameter is serving cell, configuring a configured grant timer for each serving cell.

The processor 1000 is further configured to read the program to implement the following steps: the configuration information further includes timer running indication information, where the timer running indication information is used to indicate to the UE any one or more of following information: when the reference parameter is BWP, if a change of BWP occurs, running a configured grant timer corresponding to a BWP before the change or corresponding to a BWP after the change during the change of BWP to maintain a hybrid automatic repeat request HARQ process in the BWP before the change; and when the configured grant scheduling information is received or retransmission is initiated in the BWP after the change, running a configured grant timer corresponding to the BWP after the change; when the reference parameter is TTI duration, if a change of TTI occurs, running a configured grant timer corresponding to TTI duration before the change or corresponding to TTI duration after the change during the change of TTI to maintain the HARQ process in the TTI duration before the change; when the configured grant scheduling information is received or retransmission is initiated in the TTI duration after the change, running a configured grant timer corresponding to the TTI duration after the change; when the reference parameter is uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

The starting position of the configured grant timer is the starting position of the subframe where the data transmission moment is located, or the starting position of the configured grant timer is the current slot of data transmission.

A unit of the duration of the configured grant timer includes: subframe, symbol, or slot.

As shown in Fig. 11, information processing equipment according to an embodiment not covered by the claimed invention includes: a processor 1100, configured to read the program in the storage 1120 to implement the following process: a transceiver 1110, configured to receive and transmit data under the control of a processor 1100, specifically, receive configuration information transmitted by a network side, where the configuration information includes duration of a configured grant timer; the processor 1100, configured to read the program in a storage 1120 to implement the following process: performing data transmission according to the configured grant scheduling information and the configuration information, and maintaining the state of the configured grant timer.

The duration of the configured grant timer is configured independently for one or more of the following reference parameters: BWP, TTI duration, uplink carrier, numerology or SCS corresponding to numerology, or serving cell.

In Fig. 11, a bus architecture may include any number of interconnected buses and bridges. Various circuits, specifically, one or more processors represented by the processor 1100 and a storage represented by the storage 1120, are linked together. The bus architecture may also link various other circuits such as peripherals, voltage regulators and power management circuits, which are well known in the art, and therefore a further description is omitted herein. The bus interface provides interfaces. The transceiver 1110 may be a plurality of elements, that is, includes a transmitter and a receiver, to provide units configured to communicate with various other devices over a transmission medium. For different UEs, user interface 1130 may be an interface configured to connect to a requisite device externally or internally, and the connected device includes, but is not limited to: a keypad, display, speaker, microphone, joystick, etc.

The processor 1100 is responsible for managing the bus architecture and general processing, and the storage 1120 may store data used by the processor 1100 when performing operations.

The configuration information further includes: timer running indication information, where the timer running indication information is used to indicate any one or more of the following information: when the reference parameter includes BWP, if a change of BWP occurs, running a configured grant timer corresponding to a BWP before the change or corresponding to a BWP after the change during the change of BWP to maintain a hybrid automatic repeat request HARQ process in the BWP before the change; when configured grant scheduling information is received or retransmission is initiated in the BWP after the change, running a configured grant timer corresponding to the BWP after the change; when the reference parameter includes TTI duration, if a change of TTI occurs, running a configured grant timer corresponding to TTI duration before the change or corresponding to TTI duration after the change during the change of TTI to maintain an HARQ process in the TTI duration before the change; when the configured grant scheduling information is received or retransmission is initiated in the TTI duration after the change, running a configured grant timer corresponding to the TTI duration after the change; when the reference parameter includes uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

The processor 1100 is further configured to read the program to implement the following steps: acquiring the timer duration of a target configured grant timer according to current transmission characteristics; where the transmission characteristics include BWP, TTI duration, uplink carrier, numerology or SCS corresponding to the numerology, serving cell; when there is data to be transmitted in the HARQ process, transmitting a data packet, and starting or restarting the target configured grant timer; when it is determined according to the duration of the target configured grant timer that the target configured grant timer expires, terminating the HARQ process and stopping the target configured grant timer.

The starting position of the configured grant timer is the starting position of the subframe where the data transmission moment is located, or the starting position of the configured grant timer is the current slot of data transmission.

A unit of the duration of the configured grant timer includes: subframe, symbol, or slot.

Furthermore, a computer-readable storage medium according to an embodiment of the present disclosure stores a computer program. The computer program is configured to be executed by a processor to implement the following steps: transmitting configuration information to UE, where the configuration information includes the duration of a configured grant timer; the duration of the configured grant timer is configured independently for one or more of the following reference parameters: BWP, TTI duration, uplink carrier, numerology or SCS corresponding to the numerology, or serving cell.

When the reference parameter is BWP, a configured grant timer is independently configured for each BWP; or when the reference parameter is TTI duration, a configured grant timer is independently configured for each TTI (embodiment not covered by the claimed invention); or when the reference parameter is uplink carrier, a configured grant timer is independently configured for each uplink carrier; or when the reference parameter is numerology or SCS corresponding to the numerology, a configured grant timer is independently configured for each numerology or SCS corresponding to the numerology; or when the reference parameter is serving cell, a configured grant timer is configured for each serving cell (embodiment not covered by the claimed invention).

The configuration information further includes timer running indication information, where the timer running indication information is used to indicate to the UE any one or more of the following information: when the reference parameter is BWP, if a change of BWP occurs, running a configured grant timer corresponding to a BWP before the change or corresponding to a BWP after the change during the change of BWP to maintain a hybrid automatic repeat request HARQ process in the BWP before the change; when configured grant scheduling information is received or retransmission is initiated in the BWP after the change, running a configured grant timer corresponding to the BWP after the change; when the reference parameter is TTI duration, if a change of TTI occurs, running a configured grant timer corresponding to TTI duration before the change or corresponding to TTI duration after the change during the change of TTI to maintain an HARQ process in the TTI duration before the change; when the configured grant scheduling information is received or retransmission is initiated in the TTI duration after the change, running a configured grant timer corresponding to the TTI duration after the change; when the reference parameter is uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

The starting position of the configured grant timer is the starting position of the subframe where the data transmission moment is located, or the starting position of the configured grant timer is the current slot of data transmission.

A unit of the duration of the configured grant timer includes: subframe, symbol, or slot.

Furthermore, a computer-readable storage medium according to an embodiment of the present disclosure stores a computer program. The computer program is configured to be executed by a processor to implement the following steps: receiving configuration information transmitted by a network side, where the configuration information includes the duration of a configured grant timer; performing data transmission according to the configured grant scheduling information and the configuration information, and maintaining the state of the configured grant timer; where the duration of the configured grant timer is configured independently for one or more of the following reference parameters: BWP, TTI duration, uplink carrier, numerology or SCS corresponding to the numerology, or serving cell.

The configuration information further includes timer running indication information, where the timer running indication information is used to indicate any one or more of the following information: when the reference parameter includes BWP, if a change of BWP occurs, running a configured grant timer corresponding to a BWP before the change or corresponding to a BWP after the change during the change of BWP to maintain a hybrid automatic repeat request HARQ process in the BWP before the change; when configured grant scheduling information is received or retransmission is initiated in the BWP after the change, running a configured grant timer corresponding to the BWP after the change; when the reference parameter includes TTI duration, if a change of TTI occurs, running a configured grant timer corresponding to TTI duration before the change or corresponding to TTI duration after the change during the change of TTI to maintain an HARQ process in the TTI duration before the change; when the configured grant scheduling information is received or retransmission is initiated in the TTI duration after the change, running a configured grant timer corresponding to the TTI duration after the change; when the reference parameter includes uplink carrier, if a change of uplink carrier occurs, running a configured grant timer corresponding to an uplink carrier before the change or corresponding to an uplink carrier after the change during the change of uplink carrier to maintain an HARQ process on the uplink carrier before the change; when the configured grant scheduling information is received or retransmission is initiated on the uplink carrier after the change, running a configured grant timer corresponding to the uplink carrier after the change.

The performing data transmission according to the configured grant scheduling information and the configuration information, and maintaining the state of the configured grant timer includes: acquiring the timer duration of a target configured grant timer according to current transmission characteristics; where, the transmission characteristics include BWP, TTI duration, uplink carrier, numerology or SCS corresponding to the numerology, serving cell; when there is data to be transmitted in the HARQ process, transmitting a data packet, and starting or restarting the target configured grant timer; when it is determined according to the duration of the target configured grant timer that the target configured grant timer expires, terminating the HARQ process and stopping the target configured grant timer.

The starting position of the configured grant timer is the starting position of the subframe where the data transmission moment is located, or the starting position of the configured grant timer is the current slot of data transmission.

A unit of the duration of the configured grant timer includes: subframe, symbol, or slot.

In some embodiments provided by the present application, it should be noted that, the disclosed methods and devices may be implemented in other manners. For example, the device embodiments described above are merely illustrative. For example, a division of units is only a logical function division. In actual implementation, there may be another division manner, for example, a plurality of units or components may be combined or may be integrated into another system, or some features may be ignored or not be executed. In addition, mutual coupling or direct coupling or communication connection shown or discussed may be an indirect coupling or communication connection through some interfaces, devices or units, and may be in an electrical, mechanical or other form.

In addition, each functional unit in various embodiments of the present disclosure may be integrated into one processing unit, or each unit may exist alone physically, or two or more units may be integrated into one unit. The integrated unit may be implemented in a form of hardware, or may also be implemented in a form of hardware plus a software functional unit.

The above integrated unit implemented in the form of a software functional unit may be stored in a computer readable storage medium. The above software functional unit is stored in a storage medium and includes several instructions so that a computer device (which may be a personal computer, a server, or a network device, etc.) to perform some steps of the methods described in various embodiments of the present disclosure. The foregoing storage medium includes various media capable of storing program codes, such as a USB flash drive, a mobile hard disk, a read-only memory (ROM), a random access memory (RAM), a magnetic disk, or an optical disc.

The descriptions above are optional embodiments of the present disclosure.

## Claims

1. An information processing method, applied to a network side, comprising:
transmitting configuration information to user equipment, UE, wherein the configuration information comprises duration of a configured grant timer (201);
**characterized in that** the duration of the configured grant timer is configured independently for one or more of following reference parameters: bandwidth part, BWP, or numerology or subcarrier space, SCS, corresponding to the numerology.

2. The information processing method according to claim 1, wherein
when the reference parameter is BWP, a configured grant timer is configured independently for each BWP; or
when the reference parameter is numerology or SCS corresponding to the numerology, a configured grant timer is configured independently for each numerology or SCS corresponding to the numerology.

3. The information processing method according to claim 2, wherein the configuration information further comprises timer running indication information, the timer running indication information is used to indicate to the UE following information:
when the reference parameter is BWP, if a change of BWP occurs, running a configured grant timer corresponding to a BWP before the change or corresponding to a BWP after the change during the change of BWP to maintain a hybrid automatic repeat request, HARQ, process in the BWP before the change; when configured grant scheduling information is received or retransmission is initiated in the BWP after the change, running a configured grant timer corresponding to the BWP after the change.

4. The information processing method according to claim 1, wherein a starting position of the configured grant timer is a starting position of a subframe where a data transmission moment is located, or a starting position of the configured grant timer is a current slot of data transmission.

5. The information processing method according to claim 1, wherein a unit of the duration of the configured grant timer comprises: subframe, symbol, or slot.

6. An information processing method, applied to user equipment, UE, comprising:
receiving configuration information transmitted by a network side, wherein the configuration information comprises duration of a configured grant timer (301);
performing data transmission according to the configuration information and maintaining a state of the configured grant timer (302);
**characterized in that** the duration of the configured grant timer is configured independently for one or more of following reference parameters: bandwidth part, BWP, or numerology or subcarrier space, SCS, corresponding to the numerology.

7. The information processing method according to claim 6, wherein the configuration information further comprises timer running indication information, the timer running indication information is used to indicate following information:
when the reference parameter comprises BWP, if a change of BWP occurs, running a configured grant timer corresponding to a BWP before the change or corresponding to a BWP after the change during the change of BWP to maintain a hybrid automatic repeat request, HARQ, process in the BWP before the change; when configured grant scheduling information is received or retransmission is initiated in the BWP after the change, running a configured grant timer corresponding to the BWP after the change.

8. The information processing method according to claim 6, wherein the performing data transmission according to the configuration information and maintaining the state of the configured grant timer comprises:
acquiring timer duration of a target configured grant timer according to current transmission characteristics; wherein, the transmission characteristics comprise BWP, numerology or SCS corresponding to the numerology;
when there is data to be transmitted in the HARQ process, transmitting a data packet, and starting or restarting the target configured grant timer; when it is determined according to the duration of the target configured grant timer that the target configured grant timer expires, terminating the HARQ process and stopping the target configured grant timer.

9. The information processing method according to claim 6, wherein a starting position of the configured grant timer is a starting position of a subframe where a data transmission moment is located, or a starting position of the configured grant timer is a current slot of data transmission.

10. The information processing method according to claim 6, wherein a unit of the duration of the configured grant timer comprises: subframe, symbol, or slot.

11. An information processing device, comprising:
a transmitting module (801), configured to transmit configuration information to user equipment, UE, wherein the configuration information comprises duration of a configured grant timer;
**characterized in that** the duration of the configured grant timer is configured independently for one or more of following reference parameters: bandwidth part, BWP, numerology or subcarrier space, SCS, corresponding to the numerology.

12. The information processing device according to claim 11, wherein the configuration information further comprises timer running indication information, the timer running indication information is used to indicate to the UE following information:
when the reference parameter is BWP, if a change of BWP occurs, running a configured grant timer corresponding to a BWP before the change or corresponding to a BWP after the change during the change of BWP to maintain a hybrid automatic repeat request, HARQ, process in the BWP before the change; when configured grant scheduling information is received or retransmission is initiated in the BWP after the change, running a configured grant timer corresponding to the BWP after the change.

13. An information processing device, comprising:
a receiving module (901), configured to receive configuration information transmitted by a network side, wherein the configuration information comprises duration of a configured grant timer;
a processing module (902), configured to perform data transmission according to the configuration information and maintain a state of the configured grant timer;
**characterized in that** the duration of the configured grant timer is configured independently for one or more of following reference parameters: bandwidth part, BWP, or numerology or subcarrier space, SCS, corresponding to the numerology.

14. The information processing device according to claim 13, wherein the configuration information further comprises timer running indication information, the timer running indication information is used to indicate following information:
when the reference parameter is BWP, if a change of BWP occurs, running a configured grant timer corresponding to a BWP before the change or corresponding to a BWP after the change during the change of BWP to maintain a hybrid automatic repeat request, HARQ, process in the BWP before the change; when configured grant scheduling information is received or retransmission is initiated in the BWP after the change, running a configured grant timer corresponding to the BWP after the change.

15. A computer-readable storage medium storing therein a computer program, **characterized in that** the computer program is configured to be executed by a processor to implement the steps in the method according to any one of claims 1 to 5; or, the computer program is configured to be executed by a processor to implement the steps in the method according to any one of claims 6 to 10.

## Patentansprüche

1. Informationsverarbeitungsverfahren, das auf eine Netzwerkseite angewendet wird, umfassend:
Übertragen von Konfigurationsinformationen an ein Benutzergerät, UE, wobei die Konfigurationsinformationen die Dauer eines konfigurierten Gewährungszeitgebers (201) umfassen;
**dadurch gekennzeichnet, dass** die Dauer des konfigurierten Gewährungszeitgebers unabhängig für einen oder mehrere der folgenden Referenzparameter konfiguriert ist: Bandbreitenteil, BWP, oder Numerologie oder Unterträgerraum, SCS, entsprechend der Numerologie.

2. Informationsverarbeitungsverfahren nach Anspruch 1, wobei
wenn der Referenzparameter BWP ist, ein konfigurierter Gewährungszeitgeber unabhängig für jeden BWP konfiguriert wird; oder
wenn der Referenzparameter Numerologie oder SCS entsprechend der Numerologie ist, ein konfigurierter Gewährungszeitgeber unabhängig für jede Numerologie oder SCS entsprechend der Numerologie konfiguriert wird.

3. Informationsverarbeitungsverfahren nach Anspruch 2, wobei die Konfigurationsinformationen ferner Zeitgeberlaufanzeigeinformationen umfassen, wobei die Zeitgeberlaufanzeigeinformationen verwendet werden, um dem UE folgende Informationen anzuzeigen:
wenn der Referenzparameter BWP ist, wenn eine Änderung von BWP auftritt, Betreiben eines konfigurierten Gewährungszeitgebers entsprechend einem BWP vor der Änderung oder entsprechend einem BWP nach der Änderung während der Änderung von BWP, um einen hybriden automatischen Wiederholungsanforderungs-, HARQ-, Prozess in dem BWP vor der Änderung aufrechtzuerhalten; wenn konfigurierte Gewährungsplanungsinformationen empfangen werden oder eine erneute Übertragung in dem BWP nach der Änderung initiiert wird, Betreiben eines konfigurierten Gewährungszeitgebers entsprechend dem BWP nach der Änderung.

4. Informationsverarbeitungsverfahren nach Anspruch 1, wobei eine Startposition des konfigurierten Gewährungszeitgebers eine Startposition eines Unterrahmens ist, in dem sich ein Datenübertragungsmoment befindet, oder eine Startposition des konfigurierten Gewährungszeitgebers ein aktueller Schlitz der Datenübertragung ist.

5. Informationsverarbeitungsverfahren nach Anspruch 1, wobei eine Einheit der Dauer des konfigurierten Gewährungszeitgebers Folgendes umfasst: einen Unterrahmen, ein Symbol oder einen Schlitz.

6. Informationsverarbeitungsverfahren, das auf ein Benutzergerät, UE, angewendet wird, umfassend:
Empfangen von Konfigurationsinformationen, die von einer Netzwerkseite übertragen werden, wobei die Konfigurationsinformationen die Dauer eines konfigurierten Gewährungszeitgebers (301) umfassen;
Durchführen einer Datenübertragung gemäß den Konfigurationsinformationen und Aufrechterhalten eines Zustands des konfigurierten Gewährungszeitgebers (302);
**dadurch gekennzeichnet, dass** die Dauer des konfigurierten Gewährungszeitgebers unabhängig für einen oder mehrere der folgenden Referenzparameter konfiguriert ist: Bandbreitenteil, BWP, oder Numerologie oder Unterträgerraum, SCS, entsprechend der Numerologie.

7. Informationsverarbeitungsverfahren nach Anspruch 6, wobei die Konfigurationsinformationen ferner Zeitgeberlaufanzeigeinformationen umfassen, wobei die Zeitgeberlaufanzeigeinformationen verwendet werden, um die folgenden Informationen anzuzeigen:
wenn der Referenzparameter BWP umfasst, wenn eine Änderung von BWP auftritt, Betreiben eines konfigurierten Gewährungszeitgebers entsprechend einem BWP vor der Änderung oder entsprechend einem BWP nach der Änderung während der Änderung von BWP, um einen hybriden automatischen Wiederholungsanforderungs-, HARQ-, Prozess in dem BWP vor der Änderung aufrechtzuerhalten; wenn konfigurierte Gewährungsplanungsinformationen empfangen werden oder eine erneute Übertragung in dem BWP nach der Änderung initiiert wird, Betreiben eines konfigurierten Gewährungszeitgebers entsprechend dem BWP nach der Änderung.

8. Informationsverarbeitungsverfahren nach Anspruch 6, wobei das Durchführen einer Datenübertragung gemäß den Konfigurationsinformationen und das Aufrechterhalten des Zustands des konfigurierten Gewährungszeitgebers Folgendes umfasst:
Erfassen der Zeitgeberdauer eines konfigurierten Zielgewährungszeitgebers gemäß aktuellen Übertragungseigenschaften; wobei die Übertragungseigenschaften BWP, Numerologie oder SCS entsprechend der Numerologie umfassen;
wenn es Daten gibt, die in dem HARQ-Prozess übertragen werden sollen, Übertragen eines Datenpakets und Starten oder Neustarten des konfigurierten Zielgewährungszeitgebers; wenn es gemäß der Dauer des konfigurierten Zielgewährungszeitgebers bestimmt wird, dass der konfigurierte Zielgewährungszeitgeber abläuft, Beenden des HARQ-Prozesses und Stoppen des konfigurierten Zielgewährungszeitgebers.

9. Informationsverarbeitungsverfahren nach Anspruch 6, wobei eine Startposition des konfigurierten Gewährungszeitgebers eine Startposition eines Unterrahmens ist, in dem sich ein Datenübertragungsmoment befindet, oder eine Startposition des konfigurierten Gewährungszeitgebers ein aktueller Schlitz der Datenübertragung ist.

10. Informationsverarbeitungsverfahren nach Anspruch 6, wobei eine Einheit der Dauer des konfigurierten Gewährungszeitgebers Folgendes umfasst: einen Unterrahmen, ein Symbol oder einen Schlitz.

11. Informationsverarbeitungsvorrichtung, umfassend:
ein übertragendes Modul (801), das dazu konfiguriert ist, Konfigurationsinformationen an ein Benutzergerät, UE, zu übertragen, wobei die Konfigurationsinformationen die Dauer eines konfigurierten Gewährungszeitgebers umfassen;
**dadurch gekennzeichnet, dass** die Dauer des konfigurierten Gewährungszeitgebers unabhängig für einen oder mehrere der folgenden Referenzparameter konfiguriert ist: Bandbreitenteil, BWP, Numerologie oder Unterträgerraum, SCS, entsprechend der Numerologie.

12. Informationsverarbeitungsvorrichtung nach Anspruch 11, wobei die Konfigurationsinformationen ferner Zeitgeberlaufanzeigeinformationen umfassen, wobei die Zeitgeberlaufanzeigeinformationen verwendet werden, um dem UE folgende Informationen anzuzeigen:
wenn der Referenzparameter BWP ist, wenn eine Änderung von BWP auftritt, Betreiben eines konfigurierten Gewährungszeitgebers entsprechend einem BWP vor der Änderung oder entsprechend einem BWP nach der Änderung während der Änderung von BWP, um einen hybriden automatischen Wiederholungsanforderungs-, HARQ-, Prozess in dem BWP vor der Änderung aufrechtzuerhalten; wenn konfigurierte Gewährungsplanungsinformationen empfangen werden oder eine erneute Übertragung in dem BWP nach der Änderung initiiert wird, Betreiben eines konfigurierten Gewährungszeitgebers entsprechend dem BWP nach der Änderung.

13. Informationsverarbeitungsvorrichtung, umfassend:
ein Empfangsmodul (901), das konfiguriert ist, um Konfigurationsinformationen zu empfangen, die von einer Netzwerkseite übertragen werden, wobei die Konfigurationsinformationen die Dauer eines konfigurierten Gewährungszeitgebers umfassen;
ein Verarbeitungsmodul (902), das konfiguriert ist, um eine Datenübertragung gemäß den Konfigurationsinformationen durchzuführen und einen Zustand des konfigurierten Gewährungszeitgebers aufrechtzuerhalten;
**dadurch gekennzeichnet, dass** die Dauer des konfigurierten Gewährungszeitgebers unabhängig für einen oder mehrere der folgenden Referenzparameter konfiguriert ist: Bandbreitenteil, BWP, oder Numerologie oder Unterträgerraum, SCS, entsprechend der Numerologie.

14. Informationsverarbeitungsvorrichtung nach Anspruch 13, wobei die Konfigurationsinformationen ferner Zeitgeberlaufanzeigeinformationen umfassen, wobei die Zeitgeberlaufanzeigeinformationen verwendet werden, um die folgenden Informationen anzuzeigen:
wenn der Referenzparameter BWP ist, wenn eine Änderung von BWP auftritt, Betreiben eines konfigurierten Gewährungszeitgebers entsprechend einem BWP vor der Änderung oder entsprechend einem BWP nach der Änderung während der Änderung von BWP, um einen hybriden automatischen Wiederholungsanforderungs-, HARQ-, Prozess in dem BWP vor der Änderung aufrechtzuerhalten; wenn konfigurierte Gewährungsplanungsinformationen empfangen werden oder eine erneute Übertragung in dem BWP nach der Änderung initiiert wird, Betreiben eines konfigurierten Gewährungszeitgebers entsprechend dem BWP nach der Änderung.

15. Computerlesbares Speichermedium, das darin ein Computerprogramm speichert, **dadurch gekennzeichnet, dass** das Computerprogramm dazu konfiguriert ist, von einem Prozessor ausgeführt zu werden, um die Schritte in dem Verfahren nach einem der Ansprüche 1 bis 5 zu implementieren; oder das Computerprogramm ist dazu konfiguriert, von einem Prozessor ausgeführt zu werden, um die Schritte in dem Verfahren nach einem der Ansprüche 6 bis 10 zu implementieren.

## Revendications

1. Procédé de traitement d'informations, appliqué à un côté réseau, comprenant :
la transmission d'informations de configuration à l'équipement utilisateur, UE, les informations de configuration comprenant la durée d'un temporisateur d'autorisation configuré (201) ;
**caractérisé par le fait que** la durée du temporisateur d'autorisation configuré est configurée indépendamment pour un ou plusieurs des paramètres de référence suivants : partie de largeur de bande, BWP, ou numérologie ou espace de sous-porteuse, SCS, correspondant à la numérologie.

2. Procédé de traitement d'informations selon la revendication 1, dans lequel
lorsque le paramètre de référence est une BWP, un temporisateur d'autorisation configuré est configuré indépendamment pour chaque BWP ; ou
lorsque le paramètre de référence est une numérologie ou un SCS correspondant à la numérologie, un temporisateur d'autorisation configuré est configuré indépendamment pour chaque numérologie ou SCS correspondant à la numérologie.

3. Procédé de traitement d'informations selon la revendication 2, dans lequel les informations de configuration comprennent en outre des informations d'indication de fonctionnement de temporisateur, les informations d'indication de fonctionnement de temporisateur étant utilisées pour indiquer à l'UE les informations suivantes :
lorsque le paramètre de référence est une BWP, en cas de changement de BWP, fonctionnement d'un temporisateur d'autorisation configuré correspondant à une BWP avant le changement ou correspondant à une BWP après le changement pendant le changement de BWP pour maintenir un processus de demande de répétition automatique hybride, HARQ, dans la BWP avant le changement ; lorsque des informations de programmation d'autorisation configurées sont reçues ou qu'une retransmission est déclenchée dans la BWP après le changement, fonctionnement d'un temporisateur d'autorisation configuré correspondant à la BWP après le changement.

4. Procédé de traitement d'informations selon la revendication 1, dans lequel la position de départ du temporisateur d'autorisation configuré est une position de départ d'une sous-trame dans laquelle se trouve un moment de transmission de données, ou une position de départ du temporisateur d'autorisation configuré est un créneau actuel de transmission de données.

5. Procédé de traitement d'informations selon la revendication 1, dans lequel une unité de la durée du temporisateur d'autorisation configuré comprend : une sous-trame, un symbole, ou un créneau.

6. Procédé de traitement d'informations, appliqué à un équipement utilisateur, UE, comprenant
la réception d'informations de configuration transmises par un côté réseau, les informations de configuration comprenant la durée d'un temporisateur d'autorisation configuré (301) ;
la réalisation d'une transmission de données conformément aux informations de configuration et le maintien d'un état du temporisateur d'autorisation configuré (302) ;
**caractérisé par le fait que** la durée du temporisateur d'autorisation configuré est configurée indépendamment pour un ou plusieurs des paramètres de référence suivants : partie de largeur de bande, BWP, ou numérologie ou espace de sous-porteuse, SCS, correspondant à la numérologie.

7. Procédé de traitement d'informations selon la revendication 6, dans lequel les informations de configuration comprennent en outre des informations d'indication de durée de fonctionnement de temporisateur, les informations d'indication de durée de fonctionnement de temporisateur étant utilisées pour indiquer les informations suivantes :
lorsque le paramètre de référence comprend une BWP, si un de changement de BWP se produit, fonctionnement d'un temporisateur d'autorisation configuré correspondant à une BWP avant le changement ou correspondant à une BWP après le changement pendant le changement de BWP pour maintenir un processus de demande de répétition automatique hybride, HARQ, dans la BWP avant le changement ; lorsque des informations de programmation d'autorisation configurées sont reçues ou qu'une retransmission est déclenchée dans la BWP après le changement, fonctionnement d'un temporisateur d'autorisation configuré correspondant à la BWP après le changement.

8. Procédé de traitement de l'information selon la revendication 6, dans lequel la transmission de données selon les informations de configuration et le maintien de l'état de la minuterie d'octroi configurée comprennent :
l'acquisition de la durée du minuteur d'un minuteur d'octroi configuré pour la cible en fonction des caractéristiques de transmission actuelles ; dans ce cas, les caractéristiques de transmission comprennent le BWP, la numérologie ou le SCS correspondant à la numérologie ;
lorsqu'il y a des données à transmettre dans le processus HARQ, transmission d'un paquet de données et démarrage ou redémarrage de la minuterie d'octroi configurée pour l'objectif ; lorsqu'il est déterminé, en fonction de la durée de la minuterie d'octroi configurée pour l'objectif, que la minuterie d'octroi configurée pour l'objectif expire, arrêt du processus HARQ et arrêt de la minuterie d'octroi configurée pour l'objectif.

9. Procédé de traitement d'informations selon la revendication 6, dans lequel la position de départ du temporisateur d'autorisation configuré est une position de départ d'une sous-trame dans laquelle se trouve un moment de transmission de données, ou une position de départ du temporisateur d'autorisation configuré est un créneau actuel de transmission de données.

10. Procédé de traitement d'informations selon la revendication 6, dans lequel une unité de la durée du temporisateur d'autorisation configuré comprend : une sous-trame, un symbole, ou un créneau.

11. Dispositif de traitement d'informations comprenant :
un module de transmission (801), configuré pour transmettre des informations de configuration à l'équipement de l'utilisateur, UE, dans lequel les informations de configuration comprennent la durée d'une minuterie d'octroi configurée ;
**caractérisé par le fait que** la durée de la temporisation configurée est configurée indépendamment pour un ou plusieurs des paramètres de référence suivants : partie de la largeur de bande, BWP, numérologie ou espace de sous-porteuse, SCS, correspondant à la numérologie.

12. Dispositif de traitement d'informations selon la revendication 11, dans lequel les informations de configuration comprennent en outre des informations d'indication de déroulement de la temporisation, les informations d'indication de déroulement de la temporisation étant utilisées pour indiquer à l'UE les informations suivantes :
lorsque le paramètre de référence est une BWP, en cas de changement de BWP, fonctionnement d'un temporisateur d'autorisation configuré correspondant à une BWP avant le changement ou correspondant à une BWP après le changement pendant le changement de BWP pour maintenir un processus de demande de répétition automatique hybride, HARQ, dans la BWP avant le changement ; lorsque des informations de programmation d'autorisation configurées sont reçues ou qu'une retransmission est déclenchée dans la BWP après le changement, fonctionnement d'un temporisateur d'autorisation configuré correspondant à la BWP après le changement.

13. Dispositif de traitement d'informations comprenant :
un module de réception (901), configuré pour recevoir des informations de configuration transmises par un côté du réseau, les informations de configuration comprenant la durée d'une minuterie d'octroi configurée ;
un module de traitement (902), configuré pour effectuer la transmission de données conformément aux informations de configuration et pour maintenir l'état de la minuterie d'octroi configurée ;
**caractérisé par le fait que** la durée du temporisateur d'autorisation configuré est configurée indépendamment pour un ou plusieurs des paramètres de référence suivants : partie de largeur de bande, BWP, ou numérologie ou espace de sous-porteuse, SCS, correspondant à la numérologie.

14. Dispositif de traitement d'informations selon la revendication 13, dans lequel les informations de configuration comprennent en outre des informations d'indication de la durée de fonctionnement de la minuterie, les informations d'indication de la durée de fonctionnement de la minuterie étant utilisées pour indiquer les informations suivantes :
lorsque le paramètre de référence est une BWP, en cas de changement de BWP, fonctionnement d'un temporisateur d'autorisation configuré correspondant à une BWP avant le changement ou correspondant à une BWP après le changement pendant le changement de BWP pour maintenir un processus de demande de répétition automatique hybride, HARQ, dans la BWP avant le changement ; lorsque des informations de programmation d'autorisation configurées sont reçues ou qu'une retransmission est déclenchée dans la BWP après le changement, fonctionnement d'un temporisateur d'autorisation configuré correspondant à la BWP après le changement.

15. Support de stockage lisible par ordinateur stockant en lui un programme d'ordinateur, **caractérisé en ce que** le programme d'ordinateur est configuré pour être exécuté par un processeur afin de mettre en œuvre les étapes du procédé selon l'une quelconque des revendications 1 à 5 ; ou, le programme d'ordinateur est configuré pour être exécuté par un processeur afin de mettre en œuvre les étapes du procédé selon l'une quelconque des revendications 6 à 10.
